# EUROPÄISCHE PATENTSCHRIFT

(11) **EP 3 702 646 B1**
(45) Veröffentlichungstag und Bekanntmachung des Hinweises auf die Patenterteilung: **10.11.2021**
(21) Anmeldenummer: 19159881.2
(22) Anmeldetag: 28.02.2019
(51) Int. Cl.: F16H 55/06

(54) **ZAHNKRANZTRÄGERTEIL FÜR EIN ZWEI- ODER MEHRKOMPONENTEN-ZAHNRAD SOWIE ZWEI- ODER MEHRKOMPONENTEN-ZAHNRAD MIT EINEM DERARTIGEN ZAHNKRANZTRÄGERTEIL**
TOOTHED RIM HOLDER FOR TWO-COMPONENT OR MULTICOMPONENT TOOTHED RIM AND TWO-COMPONENT OR MULTICOMPONENT TOOTHED RIM COMPRISING SUCH A TOOTHED RIM HOLDER
PIÈCE DE SUPPORT DE COURONNE DENTÉE POUR UNE ROUE DENTÉE BI- OU MULTICOMPOSANT AINSI QUE ROUE DENTÉE BI- OU MULTICOMPOSANT COMPORTANT UNE TELLE PIÈCE DE SUPPORT DE COURONNE DENTÉE

(43) Veröffentlichungstag der Anmeldung: 02.09.2020
(73) Patentinhaber: IMS Gear SE & Co. KGaA, 78166 Donaueschingen (DE)
(72) Erfinder: MAUERLECHNER, Gregor, 78652 Deisslingen (DE); HOCH, Stefan, 79853 Lenzkirch (DE); SCHERER, Stefan, 78073 Bad Dürrheim (DE); STOPPEL, Eugen, 78357 Mühlingen (DE); BERNHARD, Markus, 78353 Nenzingen (DE)
(74) Vertreter: Westphal, Mussgnug & Partner Patentanwälte mbB

(56) Entgegenhaltungen:
- EP-A1- 2 899 430
- DE-A1-102014 104 284
- GB-A- 2 064 708

## Beschreibung

Die vorliegende Erfindung betrifft ein Zahnkranzträgerteil für ein Zwei- oder Mehrkomponenten-Zahnrad. Weiterhin betrifft die Erfindung ein Zwei- oder Mehrkomponenten-Zahnrad mit einem derartigen Zahnkranzträgerteil.

Mehrkomponenten-Zahnräder sind beispielsweise in der EP 2 899 430 A1 und zeichnen sich dadurch aus, dass sie aus zumindest zwei unterschiedlichen Materialien aufgebaut sind. Beispielsweise kann das Zahnkranzträgerteil, welches den Zahnkranz bildet, aus einem ersten Material gefertigt sein, während das übrige Zahnrad aus einem zweiten Material besteht. Einer der Vorteile dieser Ausgestaltung von Zwei- oder Mehrkomponenten-Zahnrädern ist, dass das Material entsprechend der an der Stelle des Zahnrads herrschenden Belastungen gewählt werden kann. Das Zahnkranzträgerteil mit dem Zahnkranz ist hohem Verschleiß und/oder hohen Kräften ausgesetzt, während auf das sich an den Zahnkranzträgerteil anschließende, mit diesem verbundene Teil, im Folgenden als Verbindungsteil bezeichnet, typischerweise hohe Dreh- und Kippmomente wirken, die abgefangen werden müssen. Ein Zweikomponenten-Zahnrad kann daher beispielsweise aus einem ersten Kunststoff und einem zweiten Kunststoff bestehen, wobei der ersten Kunststoff für das Zahnkranzträgerteil und der zweite Kunststoff für das Verbindungsteil verwendet werden. Für den ersten Kunststoff kann ein besonders verschleißbeständiger Kunststoff gewählt werden, während der zweite Kunststoff ein selbstverstärkender Kunststoff sein kann, der auch faserverstärkt sein kann.

Bei Dreikomponenten-Zahnrädern kann beispielsweise die Nabe von einem Einlegeteil gebildet werden, das aus Metall bestehen kann.

Bei Zwei- oder Mehrkomponenten-Zahnrädern muss sichergestellt sein, dass das Zahnkranzträgerteil und das Verbindungsteil auch bei hohen Drehmomenten nicht gegeneinander verrutschen. Weist das Zahnrad ein Einlegeteil auf, darf auch dieses nicht gegenüber dem Verbindungsteil verrutschen. Es ist daher beispielsweise aus der US 2014/007724 A1 bekannt, das Zahnkranzträgerteil und das Einlegeteil mit Vorsprüngen und Vertiefungen zu versehen, mit welchen das Verbindungsteil in Umfangsrichtung formschlüssig zusammenwirkt, wodurch einem Verrutschen entgegengewirkt werden kann.

Zwei- oder Mehrkomponenten-Zahnräder werden immer häufiger im Spritzguss hergestellt, was insbesondere dann der Fall ist, wenn die Zwei- oder Mehrkomponenten-Zahnräder ganz oder teilweise aus Kunststoff bestehen. In der US 2014/007724 A1 sind zwei häufig verwendete Spritzgussverfahren dargestellt, nämlich zum einen das Schirmangussverfahren und zum anderen das Punktanguss-Verfahren. Mit diesen beiden Verfahren kann das Zahnkranzträgerteil gespritzt werden. Aufgrund der Vorsprünge und Vertiefungen des Zahnkranzträgerteils ist der Strömungsweg des verwendeten und beim Einspritzen flüssigen Materials beim Einspritzen in die Spritzgussform insofern ungünstig, als dass das Material einige Stellen innerhalb der Spritzgussform deutlich später erreicht als benachbarte Stellen. Infolgedessen bilden sich Überströmkanäle aus und das Material kühlt später ab als an den benachbarten Stellen. Das fertige Zahnkranzträgerteil weist daher Inhomogenitäten auf, wodurch die maximale Belastbarkeit von Zahnrädern, welche derartige Zahnkranzträgerteile aufweisen, begrenzt wird.

Weitere Zahnkranzträgerteile sind in der DE 10 2014 104 284 A1 und der GB 2 064 708 A offenbart.

Aufgabe einer Ausführungsform der vorliegenden Erfindung ist es, ein Zahnkranzträgerteil anzugeben, welches so gefertigt werden kann, dass es geringere Inhomogenitäten aufweist und daher im Vergleich zu bekannten und vergleichbaren Zahnkranzträgerteilen höher belastbar ist. Des Weiteren liegt einer Ausgestaltung der vorliegenden Erfindung die Aufgabe zugrunde, ein Zwei- oder Mehrkomponenten-Zahnrad zu schaffen, welches ein höher belastbares Zahnkranzträgerteil aufweist.

Diese Aufgabe wird mit den in den Ansprüchen 1 und 12 angegebenen Merkmalen gelöst. Vorteilhafte Ausführungsformen sind Gegenstand der Unteransprüche.

Eine Ausführungsform der Erfindung betrifft Zahnkranzträgerteil für ein Zwei- oder Mehrkomponenten-Zahnrad, wobei
- das Zahnkranzträgerteil
   o einen in Umfangsrichtung um eine Drehachse umlaufenden Ringabschnitt,
   o einen radial außen am Ringabschnitt angeordneten Zahnkranz, und
   o einen sich vom Ringabschnitt radial nach innen erstreckenden Fortsatz mit einem radial inneren freien Ende, oder
- das Zahnkranzträgerteil
   o einen in Umfangsrichtung um eine Drehachse umlaufenden Ringabschnitt,
   o einen radial innen am Ringabschnitt angeordneten Zahnkranz, und
   o einen sich vom Ringabschnitt radial nach außen erstreckenden Fortsatz mit einem radial äußeren freien Ende aufweist,
- der Fortsatz an seinem radial inneren freien Ende oder an seinem radial äußeren freien Ende eine erste Breite und an seinem gegenüberliegenden Ende am Übergang zum Ringabschnitt eine zweite Breite aufweist,
- die erste Breite kleiner ist als die zweite Breite,
- sich der Fortsatz kontinuierlich oder abschnittsweise kontinuierlich von der ersten Breite auf die zweite Breite erweitert, und
- auf dem Fortsatz eine Anzahl von sich im Wesentlichen entlang der Längsachse erstreckenden Vorsprüngen angeordnet ist.

Sofern zwei oder mehrere Vorsprünge vorhanden sind, sind diese beabstandet voneinander angeordnet. Sofern nur ein Vorsprung vorhanden ist, ist dieser nicht umlaufend, da ansonsten kein Formschluss zwischen dem Zahnkranzträgerteil und dem Verbindungsteil in Umfangsrichtung bereitgestellt wird.

Das Zahnkranzträgerteil kann in den Ringabschnitt und den Fortsatz unterteilt werden, wobei diese stofflich zusammenhängen. Insofern ist diese Unterteilung vorwiegend gedanklich zu sehen. Der Fortsatz geht vom Ringabschnitt aus und weist ein freies Ende auf. Am freien Ende weist der Fortsatz die erste Breite auf, während der Fortsatz mit der zweiten Breite in den Ringabschnitt übergeht. Die erste Breite und die zweite Breite beziehen sich auf eine durch die Drehachse verlaufende Ebene. Der Fortsatz erweitert sich kontinuierlich oder abschnittsweise kontinuierlich von der ersten Breite auf die zweite Breite. Unter "kontinuierlich" soll verstanden werden, dass der Fortsatz keinen Abschnitt aufweist, in welchem sich die Breite des Fortsatzes ausgehend vom freien Ende verringert. Unter "abschnittsweise kontinuierlich" soll verstanden werden, dass der Fortsatz auch Abschnitte aufweist, in welchen die Breite des Fortsatzes gleich bleibt. Aber auch in diesem Fall weist der Fortsatz keine Abschnitte auf, in denen sich die Breite verringert. Zudem soll unter "kontinuierlich" und "abschnittsweise kontinuierlich" verstanden werden, dass sich die Breite des Fortsatzes nicht sprunghaft verändert. Es sei an dieser Stelle angemerkt, dass diese Ausführungen nur für die Breite des Fortsatzes als solche gelten, nicht aber für die Vorsprünge, die gedanklich getrennt von den Fortsätzen zu betrachten sind, allerdings stofflich mit dem Fortsatz zusammenhängen.

Aufgrund der vorschlagsgemäßen Gestaltung des Fortsatzes ergibt sich für das beim Einspritzen flüssige Material ein Strömungsweg, der zu einer deutlich gleichmäßigeren Befüllung der Spritzgussform führt als es bei Zahnkranzträgerteilen der Fall ist, die beispielsweise aus der US 2014/007724 A1 bekannt sind. Folglich wird die Ausbildung von Überströmkanälen reduziert und es wird die Homogenität des vorschlagsgemäßen Zahnkranzträgerteils erhöht. Die Belastbarkeit des vorschlagsgemäßen Zahnkranzträgerteiles wird gegenüber bekannten, vergleichbaren Zahnkranzträgerteilen erhöht.

Erfindungsgemäß gehen die Vorsprünge mit einer gewölbten Übergangsfläche in den Fortsatz über. Die Verwendung von gewölbten Übergangsflächen vergleichmäßigen ebenfalls den Strömungsweg, was wiederum zu einer hohen Homogenität des Zahnkranzträgerteils führt.

Nach Maßgabe einer weiteren Ausführungsform sind auf dem Fortsatz eine Anzahl von ersten Vorsprüngen und eine Anzahl von zweiten Vorsprüngen angeordnet, wobei die ersten Vorsprünge von einer ersten Axialfläche des Fortsatzes und die zweiten Vorsprünge von einer zweiten Axialfläche des Fortsatzes ausgehen. Wie eingangs erwähnt, ist bei Zwei- oder Mehrkomponenten-zahnrädern darauf zu achten, dass die Teile des betreffenden Zahnrads, beispielsweise das Zahnkranzträgerteil, im Betrieb nicht gegenüber dem mit ihm verbundenen Verbindungsteil verrutscht. Die Vorsprünge stellen einen Formschluss in Umfangsrichtung mit dem Verbindungsteil bereit, wodurch die Gefahr des Verrutschens reduziert wird. Je höher die Anzahl der Vorsprünge, desto geringer die Gefahr des Verrutschens. In dieser Ausführungsform gehen vom Fortsatz in beide Richtungen der Drehachse Vorsprünge aus, so dass die Anzahl der Vorsprünge erhöht wird. Zudem kann der Fortsatz in dieser Ausführungsform bezogen auf eine durch die Drehachse verlaufende Ebene im Bereich der Vorsprünge symmetrisch ausgestaltet sein, wobei die Symmetrieebene senkrecht zur Drehachse verläuft. Auch hierdurch wird der Strömungsweg für das Material beim Einspritzen vergleichmäßigt, so dass sich das Zahnkranzträgerteil mit einer erhöhten Homogenität fertigen lässt, was sich, wie erwähnt, in einer erhöhten Belastbarkeit äußert. Die Vorsprüngen sind beabstandet zueinander angeordnet. Zwischen zwei Vorsprüngen sind die beiden Axialflächen zugänglich.

In einer weitergebildeten Ausführungsform können die ersten Vorsprünge und die zweiten Vorsprünge in Umfangsrichtung versetzt zueinander angeordnet sein. Es lassen sich Materialhäufungen vermeiden, was ebenfalls zu einer erhöhten Homogenität des Zahnkranzträgerteils führt.

Bei einer weitergebildeten Ausführungsform können von der ersten Axialfläche und/oder von der zweiten Axialfläche eine Anzahl von radial inneren Vorsprüngen und eine Anzahl von radial äußeren Vorsprüngen ausgehen. Ausgehend vom freien Ende zum Ringteil hin sind zwei radial beabstandet zueinander angeordnete Vorsprünge vorhanden, wodurch sich die Anzahl der Vorsprünge insgesamt erhöhen und sich die Gefahr des Verrutschens des Zahnkranzträgerteils gegenüber dem Verbindungsteil reduzieren lässt. Es ist ebenfalls möglich, mehr als zwei radial zueinander beabstandet angeordnete Vorsprünge innerhalb einer durch die Drehachse verlaufende Ebene vorzusehen, wodurch die Anzahl der Vorsprünge weiter erhöht werden kann.

Bei einer weiteren Ausführungsform können innerhalb der Vorsprünge zwei oder mehrere sich im Wesentlichen entlang der Längsachse erstreckenden Erweiterungen angeordnet sein. Grundsätzlich wird die Gefahr des Verrutschens des Zahnkranzträgerteils gegenüber dem Verbindungsteil umso stärker reduziert, je größer die Querschnittsfläche der Vorsprünge ist. Allerdings kann es bei besonders großen Querschnittsflächen wiederum zur Ausbildung von Überströmkanälen innerhalb der Vorsprünge kommen, was aus den genannten Gründen vermieden werden sollte. Mit den Erweiterungen innerhalb eines Vorsprungs können einerseits die Ausbildung von Überströmkanälen reduziert und andererseits eine große Querschnittsfläche erreicht werden.

Eine weitergebildete Ausführungsform zeichnet sich dadurch aus, dass die Vorsprünge einen trapezförmigen Querschnitt aufweisen. Es hat sich herausgestellt, dass sich bei der Verwendung von Vorsprüngen mit einem trapezförmigen Querschnitt das Zahnkranzträgerteil mit einer hohen Homogenität fertigen lässt.

Nach Maßgabe einer weiteren Ausführungsform weisen die Vorsprünge eine Stirnfläche und/oder eine weitere Stirnfläche auf, welche parallel zu einer senkrecht zur Drehachse verlaufenden Ebene verläuft. Auch in dieser Ausgestaltung lässt sich das Zahnkranzträgerteil mit einer hohen Homogenität fertigen.

Eine weitere Ausführungsform zeichnet sich dadurch aus, dass
- die erste Axialfläche und/oder die zweite Axialfläche einen Axialflächenwinkel mit einer senkrecht zur Drehachse verlaufenden Ebene einschließen, und
- die Vorsprünge jeweils zumindest eine Stirnfläche aufweisen, die einen Stirnflächenwinkel mit einer senkrecht zur Drehachse verlaufenden Ebene einschließt, und
- der Stirnflächenwinkel größer als der oder gleich dem Axialflächenwinkel ist.

Auch in dieser Ausgestaltung lässt sich das Zahnkranzträgerteil mit einer hohen Homogenität fertigen.

Nach Maßgabe einer fortentwickelten Ausführungsform weisen die Vorsprünge eine weitere Stirnfläche auf, welche
- parallel zu einer senkrecht zur Drehachse verlaufenden Ebene verläuft oder
- einen weiteren Stirnflächenwinkel mit einer senkrecht zur Drehachse verlaufenden Ebene einschließt.

Auch in dieser Ausgestaltung lässt sich das Zahnkranzträgerteil mit einer hohen Homogenität fertigen.

Nach Maßgabe einer weiteren Ausführungsform weisen die Vorsprünge eine äußere Radialfläche und eine innere Radialfläche auf, wobei die äußere Radialfläche und/oder die innere Radialfläche parallel zur Drehachse verlaufen. Hierdurch lässt sich das Material gleichmäßig in die Spritzgussform einbringen, wodurch eine hohe Homogenität des Zahnkranzträgerteils erreicht werden kann.

Gemäß einer fortgebildeten Ausführungsform sind die Axialflächen, die Stirnflächen, die weiteren Stirnflächen, die äußeren Radialflächen und/oder die inneren Radialflächen gewölbt. Mit den Wölbungen lassen sich gezielt die Strömungswege so einstellen, dass eine gleichmäßige Befüllung der Spritzgussform ermöglicht wird, was wiederum zu einer erhöhten Homogenität führt.

Eine Ausgestaltung der Erfindung betrifft ein Zwei- oder Mehrkomponenten-Zahnrad, umfassend
- ein Zahnkranzträgerteil nach einem der vorherigen Ansprüche, und
- ein formschlüssig mit dem Zahnkranzträgerteil verbundenes Verbindungsteil, wobei das Verbindungsteil den Fortsatz umschließt.

Die technischen Effekte und Vorteile, die sich mit dem vorschlagsgemäßen Zwei- oder Mehrkomponenten-Zahnrad erreichen lassen, entsprechen denjenigen, die für das vorliegende Zahnkranzträgerteil erörtert worden sind. Zusammenfassend sei darauf hingewiesen, dass sich aufgrund der vorschlagsgemäßen Gestaltung des Fortsatzes für das beim Einspritzen flüssige Material ein Strömungsweg ergibt, der zu einer deutlich gleichmäßigeren Befüllung der Spritzgussform führt als es bei Zahnkranzträgerteilen der Fall ist, die beispielsweise aus der US 2014/007724 A1 bekannt sind. Folglich wird die Ausbildung von Überströmkanälen reduziert und es wird die Homogenität des vorschlagsgemäßen Zahnkranzträgerteils erhöht. Die Belastbarkeit des vorschlagsgemäßen Zwei- oder Mehrkomponenten-Zahnrads wird gegenüber bekannten, vergleichbaren Zwei- oder Mehrkomponenten-Zahnrädern erhöht. Diese technischen Effekte und Vorteile kommen insbesondere dann zum Tragen, wenn das Zahnkranzträgerteil aus einem ersten Kunststoff und das Verbindungsteil aus einem zweiten Kunststoff gefertigt sind. Der erste Kunststoff kann ein Hochleistungsthermoplast oder ein technischer Thermoplast sein, während der zweite Kunststoff ein Hochleistungsthermoplast, ein technischer Thermoplast oder ein Duroplast sein kann. Es bietet sich an, den zweiten Kunststoff, aus dem das Verbindungsteil gefertigt ist, faserverstärkt auszuführen, um eine besonders hohe axiale Steifigkeit zu erreichen, was insbesondere bei Schrägverzahnungen anzustreben ist.

Eine fortgebildete Ausgestaltung zeichnet sich dadurch aus, dass das Zwei- oder Mehrkomponenten-Zahnrad als ein Stirnrad, als ein Schraubrad oder als ein Schneckenrad ausgestaltet ist, wobei das Zahnkranzträgerteil
- einen in Umfangsrichtung um eine Drehachse umlaufenden Ringabschnitt,
- einen radial außen am Ringabschnitt angeordneten Zahnkranz, und
- einen sich vom Ringabschnitt radial nach innen erstreckenden Fortsatz mit einem radial inneren freien Ende aufweist.

In dieser Ausgestaltung ist das Zwei- oder Mehrkomponenten-Zahnrad als ein Stirnrad ausgestaltet, welches in vielen Anwendungen zum Einsatz kommen kann, insbesondere in Stirnradgetrieben, die weite Verbreitung finden. Die Ausgestaltung des vorschlagsgemäßen Zwei- oder Mehrkomponenten-Zahnrad ist aber nicht auf ein Stirnrad begrenzt. Das vorschlagsgemäße Zwei- oder Mehrkomponenten-Zahnrad kann auch als Schraubrad oder Schneckenrad ausgebildet sein, so dass dieses in einem Schraubradgetriebe oder einem Schneckengetriebe eingesetzt werden kann. Schraubradgetriebe und Schneckengetriebe werden beispielsweise in elektromechanischen Antrieben von Lenkungen (EPS, *"electrc power steering"*) eingesetzt.

Nach Maßgabe einer weiterentwickelten Ausgestaltung umfasst das Zwei- oder Mehrkomponenten-Zahnrad ein Einlegeteil, welches mit dem Verbindungsteil verbunden ist und vom Verbindungsteil umschlossen wird. Das Einlegeteil kann zum Ausbilden einer Wellen-Nabenverbindung verwendet werden. Während das Zahnkranzträgerteil und das Verbindungsteil wie erwähnt aus einem ersten Kunststoff bzw. einen zweiten Kunststoff gefertigt sein können, bietet es sich für die Ausbildung einer hoch belastbaren Wellen-Naben-Verbindung an, das Einlegeteil aus Metall zu fertigen.

Gemäß einer weiteren Ausgestaltung ist das Zwei- oder Mehrkomponenten-Zahnrad als ein Hohlrad ausgestaltet, wobei das Zahnkranzträgerteil
- einen in Umfangsrichtung um eine Drehachse umlaufenden Ringabschnitt,
- einen radial innen am Ringabschnitt angeordneten Zahnkranz, und
- einen sich vom Ringabschnitt radial nach außen erstreckenden Fortsatz mit einem radial äußeren freien Ende aufweist.

In dieser Ausgestaltung kann das Zahnrad insbesondere in Planetengetrieben zum Einsatz kommen.

Beispielhafte Ausführungsformen der Erfindung werden im Folgenden unter Bezugnahme auf die beigefügten Zeichnungen näher erläutert. Es zeigen
- Figur 1: ein erstes Ausführungsbeispiel eines erfindungsgemäßen Zahnkranzträgerteils,
- Figur 2: ein zweites Ausführungsbeispiel eines erfindungsgemäßen Zahnkranzträgerteils,
- Figur 3: ein drittes Ausführungsbeispiel eines erfindungsgemäßen Zahnkranzträgerteils,
- Figur 4: ein viertes Ausführungsbeispiel eines erfindungsgemäßen Zahnkranzträgerteils,
- Figur 5: ein fünftes Ausführungsbeispiel eines erfindungsgemäßen Zahnkranzträgerteils,
- Figur 6: ein sechstes Ausführungsbeispiel eines erfindungsgemäßen Zahnkranzträgerteils,
- Figur 7: ein siebtes Ausführungsbeispiel eines erfindungsgemäßen Zahnkranzträgerteils,
- Figur 8: ein achtes Ausführungsbeispiel eines erfindungsgemäßen Zahnkranzträgerteils, jeweils anhand einer Schnittdarstellung,
- Figur 9: eine prinzipielle Schnittdarstellung eines erfindungsgemäßen Zweikomponenten-Zahnrad, welches als ein Hohlrad ausgestaltet ist, und
- Figur 10: eine Seitenansicht auf ein erfindungsgemäßes Mehrkomponenten-Zahnrad, welches als ein Stirnrad ausgestaltet ist.

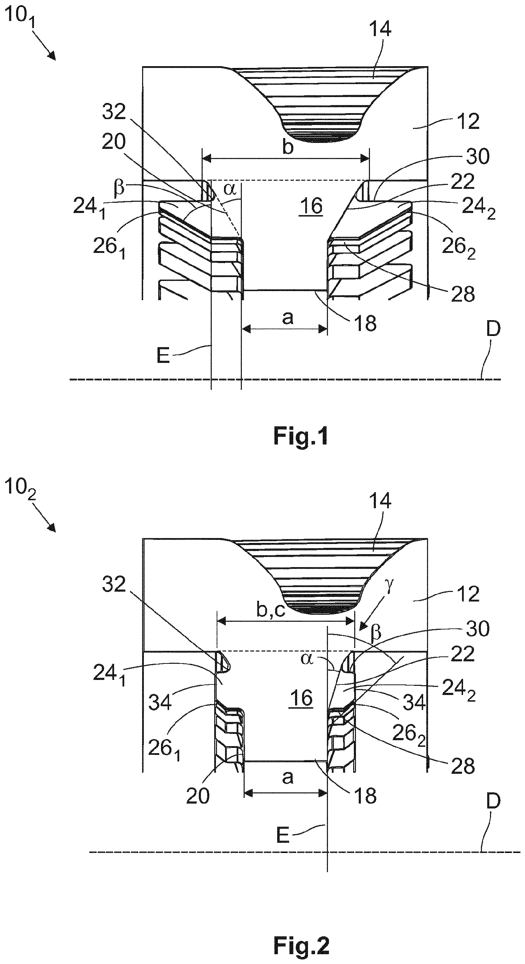

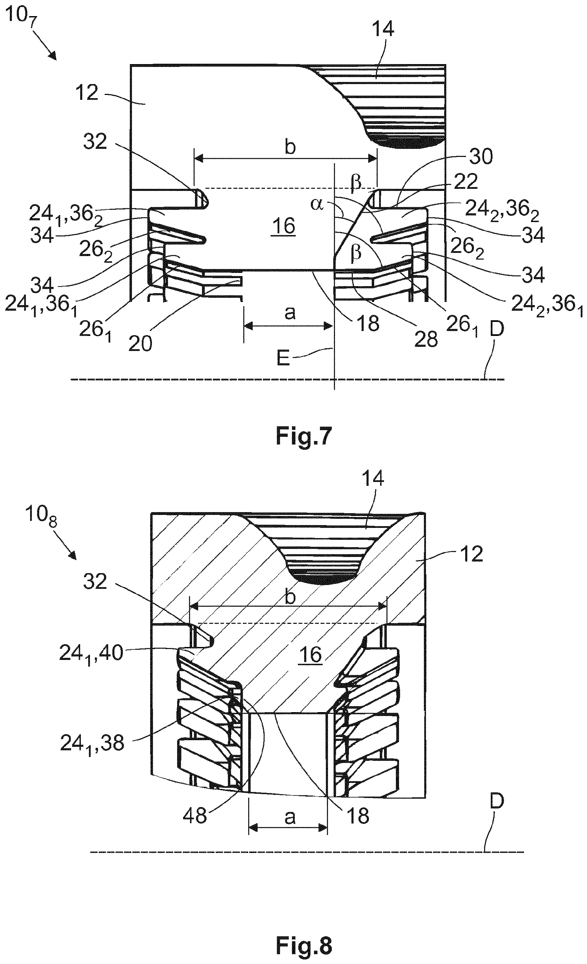

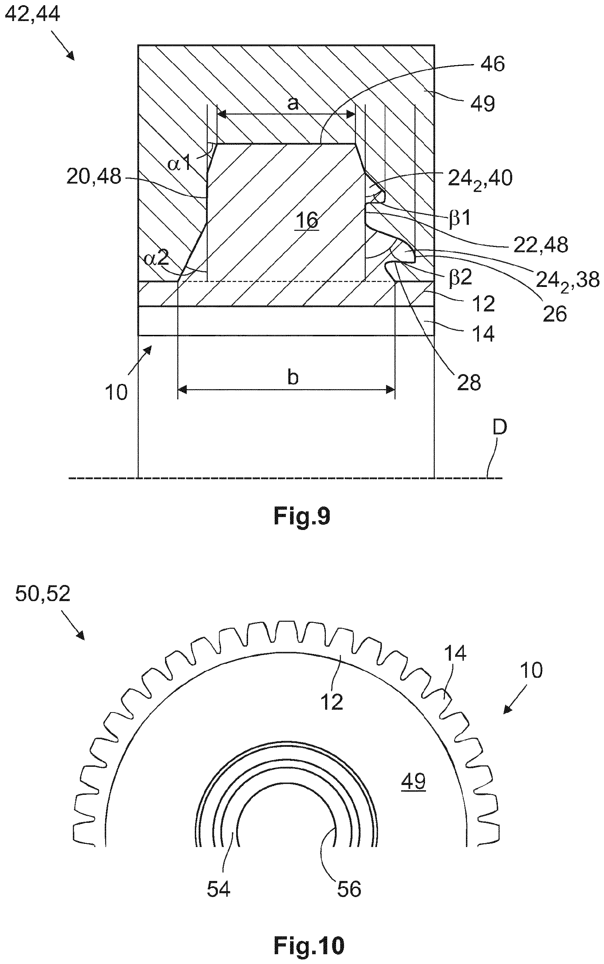

In den Figuren 1 bis 8 sind verschiedene Ausführungsbeispiele eines erfindungsgemäßen Zahnkranzträgerteils 10 jeweils anhand von Schnittdarstellungen gezeigt, welches für ein Zweikomponenten-Zahnrad 42 oder ein Mehrkomponenten-Zahnrad 50 verwendet werden kann (siehe Figuren 9 und 10). Das Zwei- oder Mehrkomponenten-Zahnrad 42, 50 ist konzentrisch zu einer Drehachse D angeordnet, um welche sich das Zwei- oder Mehrkomponenten-Zahnrad 42, 50 je nach Ausgestaltung drehen kann. Die Schnittebene der Schnittdarstellungen der Figuren 1 bis 8 verläuft durch die Drehachse D. Gezeigt ist nur ein Halbschnitt des Zahnkranzträgerteils 10.

Das erfindungsgemäße Zahnkranzträgerteil 10₁ nach dem in Figur 1 dargestellten ersten Ausführungsbeispiel umfasst einen Ringabschnitt 12, der in Umfangsrichtung ringförmig um die Drehachse D verläuft. Radial außen bildet der Ringabschnitt 12 einen Zahnkranz 14, mit welchem das Zahnkranzträgerteil 10 bzw. das mit dem Zahnkranzträgerteil 10 versehene Zwei- oder Mehrkomponenten-Zahnrad 42, 50 mit einem hier nicht dargestellten Zahnrad in kämmendem Eingriff gebracht werden kann. Je nach Ausgestaltung kann das Zwei- oder Mehrkomponenten-Zahnrad 42, 50 als Stirnrad, Schraubrad oder Schneckenrad ausgebildet sein und mit einem entsprechend gestalteten Zahnrad in Eingriff gebracht werden.

Das erfindungsgemäße Zahnkranzträgerteil 10₁ weist ferner einen Fortsatz 16 auf, der sich ausgehend vom Ringabschnitt 12 radial nach innen zur Drehachse D hin erstreckt und ein radial inneres freies Ende 18 bildet. Am radial inneren freien Ende 18 weist der Fortsatz 16 eine erste Breite a auf, die sich parallel zur Drehachse D erstreckt. Am Übergang zum Ringabschnitt 12 weist der Fortsatz 16 eine zweite Breite b auf, die sich ebenfalls parallel zur Drehachse D erstreckt. Ausgehend vom radial inneren freien Ende 18 erweitert sich der Fortsatz 16 kontinuierlich von der ersten Breite a bis zur zweiten Breite b. Im ersten Ausführungsbeispiel des Zahnkranzträgerteils 10₁ nimmt die Breite gleichmäßig zu, so dass der Fortsatz 16 trichterförmig aufgebaut ist.

Der Fortsatz 16 weist eine erste Axialfläche 20 und eine zweite Axialfläche 22 auf, die jeweils einen gleichgroßen Axialflächenwinkel **α** mit einer senkrecht zur Drehachse D verlaufenden Ebene E einschließen. Von der ersten Axialfläche 20 und der zweiten Axialfläche 22 geht eine Anzahl von Vorsprüngen 24 aus, wobei im ersten Ausführungsbeispiel von der ersten Axialfläche 20 erste Vorsprünge 24₁ und von der zweiten Axialfläche 22 zweite Vorsprünge 24₂ ausgehen. Die ersten Vorsprünge 24₁ und die zweiten Vorsprünge 24₂ weisen dieselben Abmessungen auf, weisen jedoch in unterschiedliche Richtungen bezüglich der Drehachse D. Zudem sind die ersten Vorsprünge 24₁ und die zweiten Vorsprünge 24₂ in Umfangsrichtung jeweils beabstandet zueinander angeordnet, so dass zwischen zwei benachbarten Vorsprüngen 24₁, 24₂eine Lücke verbleibt. Zudem sind die ersten Vorsprünge 24₁ und die zweiten Vorsprünge 24₂ in Umfangsrichtung versetzt zueinander angeordnet.

Die Vorsprünge 24₁, 24₂ sind im Wesentlichen trapezförmig aufgebaut und umfassen jeweils eine Stirnfläche 26, hier eine erste Stirnfläche 26₁ bzw. eine zweite Stirnfläche 26₂, eine innere Radialfläche 28 und eine äußere Radialfläche 30 auf. Die innere Radialfläche 28 und die äußere Radialfläche 30 verlaufen parallel zueinander und parallel zur Drehachse D, während die Stirnfläche 26 einen Stirnflächenwinkel **β** mit einer senkrecht zur Drehachse D verlaufenden Ebene E einschließt. Im ersten Ausführungsbeispiel ist der Stirnflächenwinkel **β** größer als der Axialflächenwinkel **α**.

Die Vorsprünge 24 gehen radial außen mit einer gewölbten Übergangsfläche 32 in den Fortsatz 16 über.

Im zweiten Ausführungsbeispiel des Zahnkranzträgerteils 10₂, welches in der Figur 2 dargestellt ist, weisen die Vorsprünge 24 jeweils eine weitere Stirnfläche 34 auf, welche einen weiteren Stirnflächenwinkel **γ** mit einer senkrecht zur Drehachse D verlaufenden Ebene E einschließt. Im zweiten Ausführungsbeispiel verläuft die weitere Stirnfläche 34 parallel zu der senkrecht zur Drehachse D verlaufenden Ebene E, weshalb der weitere Stirnflächenwinkel **γ** gleich null ist. Er kann aber genauso gut von null abweichen und dabei kleiner oder größer als der Axialflächenwinkel **α** sein. Zudem kann der weitere Stirnflächenwinkel **γ** auch kleiner oder größer als der Stirnflächenwinkel **β** sein.

Die beiden weiteren Stirnflächen 34 der ersten Vorsprünge 24₁ und der zweiten Vorsprünge 24₂ weisen einen Abstand c auf, der im zweiten Ausführungsbeispiel gleich der zweiten Breite b ist.

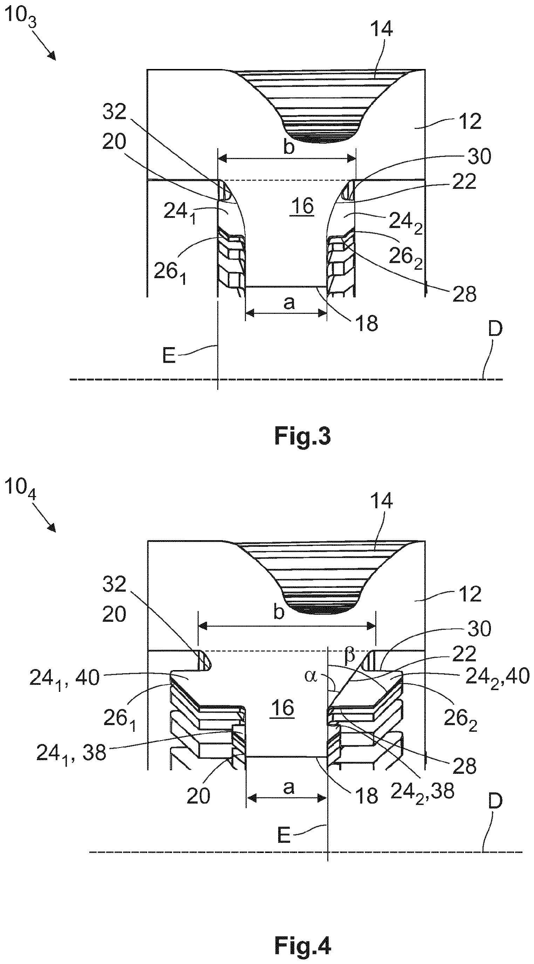

Das in Figur 3 dargestellte dritte Ausführungsbeispiel des Zahnkranzträgerteils 10₃ gleicht weitgehend dem zweiten Ausführungsbeispiel des Zahnkranzträgerteils 10₂, allerdings sind die erste Axialfläche 20 und die zweite Axialfläche 22 gewölbt ausgebildet, so dass sich kein eindeutiger Axialflächenwinkel **α** bestimmen lässt.

Das in Figur 4 dargestellte vierte Ausführungsbeispiel des Zahnkranzträgerteils 10₄ gleicht weitgehend dem ersten Ausführungsbeispiel des Zahnkranzträgerteils 10₁, wobei der Stirnflächenwinkel **β** fast gleich dem Axialflächenwinkel **α** ist. Insofern sind die Vorsprünge 24 im vierten Ausführungsbeispiel annäherungsweise parallelogrammförmig.

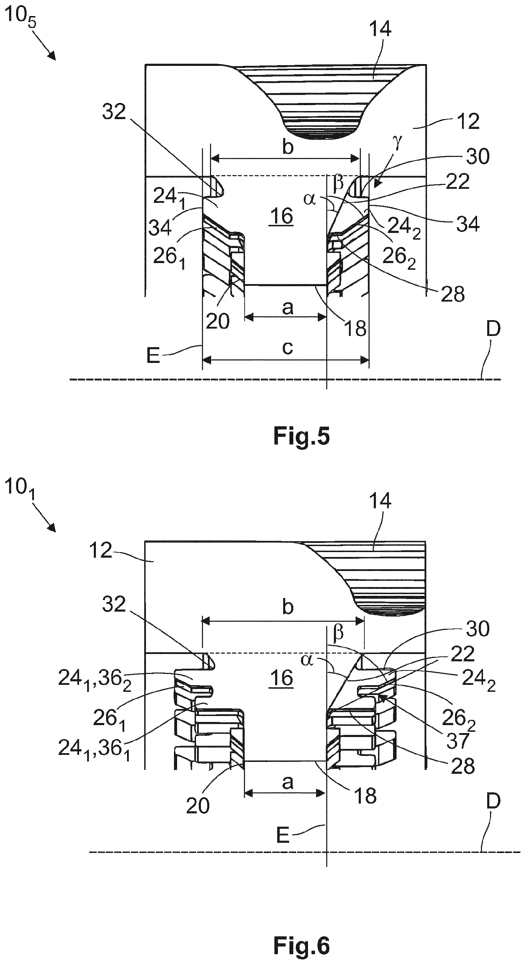

Das in Figur 5 dargestellte fünfte Ausführungsbeispiel des Zahnkranzträgerteils 10₅ gleicht weitgehend dem zweiten Ausführungsbeispiel des Zahnkranzträgerteils 10₂, allerdings ist der Abstand c zwischen den beiden weiteren Stirnflächen 34 größer als die zweite Breite b.

Die Vorsprünge 24 des Zahnkranzträgerteils 10₆ nach dem sechsten Ausführungsbeispiel weisen eine erste Erweiterung 36₁ und eine zweite Erweiterung 36₂ auf, die sich im Wesentlichen entlang der Drehachse D erstrecken. Die Stirnfläche 26 der ersten Erweiterung 36₁ ist gewölbt, während die Stirnfläche 26 der zweiten Erweiterung 36₂ einen Stirnflächenwinkel **β** aufweist, der größer ist als der Axialflächenwinkel **α**. Die weitere Stirnfläche 34 ist ebenfalls gewölbt. Die innere Radialfläche 28 und die äußere Radialfläche 30 verlaufen parallel zueinander und parallel zur Drehachse D. Die Erweiterungen 36₁, 36₂ sind von einer Vertiefung 37 voneinander getrennt, allerdings reicht die Vertiefung 37 nicht bis zu den Axialflächen 20, 22.

Auch die Vorsprünge 24 des Zahnkranzträgerteils 10₇ nach dem siebten Ausführungsbeispiel weisen die erste Erweiterung 36₁ und die zweite Erweiterung 36₂ auf, allerdings weisen die erste Erweiterung 36₁ eine erste Stirnfläche 26₁ und die zweite Erweiterung 36₂ eine zweite Stirnfläche 26₂ auf, die parallel zueinander verlaufen.

Im achten Ausführungsbeispiel weist das Zahnkranzträgerteil 10s einen radial inneren Vorsprung 38 und einen radial äußeren Vorsprung 40 auf. Der radial innere Vorsprung 38 ist auf einem Abschnitt 48 des Fortsatzes 16 angeordnet, in welchem sich die Breite des Fortsatzes 16 nicht ändert.

In Figur 9 ist ein Ausführungsbeispiel eines Zweikomponenten-Zahnrads 42 dargestellt, welches als ein Hohlrad 44 ausgeführt ist. Der Zahnkranz 14 des Zahnkranzträgerteils 10 ist daher radial innen am Ringabschnitt 12 angeordnet, während sich der Fortsatz 16 vom Ringabschnitt 12 radial nach außen erstreckt und ein radial äußeres freies Ende 46 aufweist. Ein Verbindungsteil 49 ist mit dem Zahnkranzträgerteil 10 dadurch verbunden, indem es um den Fortsatz 16 spritzt ist.

Das Zahnkranzträgerteil 10 weist den bereits erwähnten Abschnitt 48 auf, in welchem sich die Breite des Fortsatzes 16 nicht ändert. In diesem Abschnitt 48 ist ein radial äußerer Vorsprung 40 angeordnet. Ein radial innerer Vorsprung 38 weist eine gewölbte Stirnfläche 26 und eine gewölbte innere Radialfläche 28 auf.

In Figur 10 ist ein Mehrkomponenten-Zahnrad 50, in diesem Fall ein Dreikomponenten-Zahnrad 50 anhand einer Seitenansicht gezeigt, welches als ein Stirnrad 52 ausgeführt ist. Eine Ausführung des Mehrkomponenten-Zahnrads 50 als Schraubrad oder Schneckenrad (nicht dargestellt), ist ebenfalls denkbar. Das Dreikomponenten-Zahnrad 50 umfasst ein Zahnkranzträgerteil 10 nach einem der zuvor diskutierten Ausführungsbeispiele, an dessen Ringabschnitt 12 radial außen ein Zahnkranz 14 angeordnet ist. In diesem Fall ist das Verbindungsteil 49 radial einwärts vom Zahnkranzträgerteil 10 angeordnet und mit diesem verbunden. Weiterhin umfasst das Dreikomponenten-Zahnrad 50 ein Einlegeteil 54, welches radial einwärts vom Verbindungsteil 49 angeordnet und mit diesem verbunden ist. Das Einlegeteil 54 bildet eine Nabe 56, mit dem das Stirnrad 52 mit einer Welle hier nicht dargestellte Welle verbunden werden kann.

### Bezugszeichenliste

- 10: Zahnkranzträgerteil
- 10₁ - 10₈: Zahnkranzträgerteil
- 12: Ringabschnitt
- 14: Zahnkranz
- 16: Fortsatz
- 18: inneres freies Ende

- 20: erste Axialfläche
- 22: zweite Axialfläche
- 24: Vorsprünge
- 24₁: erste Vorsprünge
- 24₂: zweite Vorsprünge
- 26: Stirnfläche
- 26₁: erste Stirnfläche
- 26₂: zweite Stirnfläche
- 28: innere Radialfläche

- 30: äußere Radialfläche
- 32: gewölbte Übergangsfläche
- 34: weitere Stirnfläche
- 36: Erweiterung
- 36₁: erste Erweiterung
- 36₂: zweite Erweiterung
- 37: Vertiefung
- 38: radial innerer Vorsprung

- 40: radial äußerer Vorsprung
- 42: Zweikomponenten-Zahnrad
- 44: Hohlrad
- 46: radial äußeres freies Ende
- 48: Abschnitt
- 49: Verbindungsteil

- 50: Mehrkomponenten-Zahnrad
- 52: Stirnrad
- 54: Einlegeteil
- 56: Nabe

- D: Drehachse

- **α**: Axialflächenwinkel
- **α1, α2**: Axialflächenwinkel
- **β**: Stirnflächenwinkel
- **β1, β2**: Stirnflächenwinkel
- **γ**: weiterer Stirnflächenwinkel

## Patentansprüche

1. Zahnkranzträgerteil (10) für ein Zwei- oder Mehrkomponenten-Zahnrad (46, 50), wobei
- das Zahnkranzträgerteil (10)
o einen in Umfangsrichtung um eine Drehachse (D) umlaufenden Ringabschnitt (12),
o einen radial außen am Ringabschnitt (12) angeordneten Zahnkranz (14), und
o einen sich vom Ringabschnitt (12) radial nach innen erstreckenden Fortsatz (16) mit einem radial inneren freien Ende (18), oder
- das Zahnkranzträgerteil (10)
o einen in Umfangsrichtung um eine Drehachse (D) umlaufenden Ringabschnitt (12),
o einen radial innen am Ringabschnitt (12) angeordneten Zahnkranz (14), und
o einen sich vom Ringabschnitt (12) radial nach außen erstreckenden Fortsatz (16) mit einem radial äußeren freien Ende (46) aufweist,
- der Fortsatz (16) an seinem radial inneren freien Ende (18) oder an seinem radial äußeren freien Ende (46) eine erste Breite (a) und an seinem gegenüberliegenden Ende am Übergang zum Ringabschnitt (12) eine zweite Breite (b) aufweist,
- die erste Breite (a) kleiner ist als die zweite Breite (b),
- sich der Fortsatz (16) kontinuierlich oder abschnittsweise kontinuierlich von der ersten Breite (a) auf die zweite Breite (b) erweitert, und
- auf dem Fortsatz (16) eine Anzahl von sich entlang der Drehachse (D) erstreckenden Vorsprüngen (24) angeordnet ist,
**dadurch gekennzeichnet, dass** die Vorsprünge (24) mit einer gewölbten Übergangsfläche (32) in den Fortsatz (16) übergehen.

2. Zahnkranzträgerteil (10) nach Anspruch 1,
**dadurch gekennzeichnet, dass** auf dem Fortsatz (16) eine Anzahl von ersten Vorsprüngen (24₁) und eine Anzahl von zweiten Vorsprüngen (24₂) angeordnet sind, wobei die ersten Vorsprünge (24₁) von einer ersten Axialfläche (20) des Fortsatzes (16) und die zweiten Vorsprünge (24₂) von einer zweiten Axialfläche (22) des Fortsatzes (16) ausgehen.

3. Zahnkranzträgerteil (10) nach Anspruch 2,
**dadurch gekennzeichnet, dass** die ersten Vorsprünge (24₁) und die zweiten Vorsprünge (24₂) in Umfangsrichtung versetzt zueinander angeordnet sind.

4. Zahnkranzträgerteil (10) nach einem der Ansprüche 2 oder 3, **dadurch gekennzeichnet, dass** von der ersten Axialfläche (20) und/oder von der zweiten Axialfläche (22) eine Anzahl von radial inneren Vorsprüngen (38) und eine Anzahl von radial äußeren Vorsprüngen (40) ausgehen.

5. Zahnkranzträgerteil (10) nach einem der vorherigen Ansprüche,
**dadurch gekennzeichnet, dass** innerhalb der Vorsprünge (24) zwei oder mehrere sich entlang der Drehachse (D) erstreckenden Erweiterungen (36) angeordnet sind.

6. Zahnkranzträgerteil (10) nach einem der vorherigen Ansprüche,
**dadurch gekennzeichnet, dass** die Vorsprünge (24) einen trapezförmigen Querschnitt aufweisen.

7. Zahnkranzträgerteil (10) nach einem der vorherigen Ansprüche,
**dadurch gekennzeichnet, dass** die Vorsprünge (24) eine Stirnfläche (26) und/oder eine weitere Stirnfläche (34) aufweisen, welche parallel zu einer senkrecht zur Drehachse (D) verlaufenden Ebene (E) verläuft.

8. Zahnkranzträgerteil (10) nach einem der Ansprüche 2 bis 6, **dadurch gekennzeichnet, dass**
- die erste Axialfläche (20) und/oder die zweite Axialfläche (22) einen Axialflächenwinkel (**α,α1,α2**) mit einer senkrecht zur Drehachse (D) verlaufenden Ebene (E) einschließen, und
- die Vorsprünge (24) jeweils zumindest eine Stirnfläche (26) aufweisen, die einen Stirnflächenwinkel (**β, β1, β2**) mit einer senkrecht zur Drehachse (D) verlaufenden Ebene (E) einschließt, und
- der Stirnflächenwinkel (**β, β1, β2**) größer als der oder gleich dem Axialflächenwinkel (**α, α1, α2**) ist.

9. Zahnkranzträgerteil (10) nach Anspruch 8,
**dadurch gekennzeichnet, dass** die Vorsprünge (24) eine weitere Stirnfläche (34) aufweisen, welche
- parallel zu einer senkrecht zur Drehachse (D) verlaufenden Ebene (E) verläuft oder
- einen weiteren Stirnflächenwinkel (**γ**) mit einer senkrecht zur Drehachse (D) verlaufenden Ebene (E) einschließt.

10. Zahnkranzträgerteil (10) nach einem der vorherigen Ansprüche,
**dadurch gekennzeichnet, dass** die Vorsprünge (24) eine äußere Radialfläche (30) und eine innere Radialfläche (28) aufweisen, wobei die äußere Radialfläche (30) und/oder die innere Radialfläche (28) parallel zur Drehachse (D) verlaufen.

11. Zahnkranzträgerteil (10) nach einem der Ansprüche 2 bis 6, **dadurch gekennzeichnet, dass** die Axialflächen (20, 22), die Stirnflächen (26), die weiteren Stirnflächen (34), die äußeren Radialflächen (30) und/oder die inneren Radialflächen (28) gewölbt sind.

12. Zwei- oder Mehrkomponenten-Zahnrad (42, 50), umfassend
- ein Zahnkranzträgerteil (10) nach einem der vorherigen Ansprüche, und
- ein formschlüssig mit dem Zahnkranzträgerteil (10) verbundenes Verbindungsteil (49), wobei das Verbindungsteil (49) den Fortsatz (16) umschließt.

13. Zwei- oder Mehrkomponenten-Zahnrad (42, 50), nach Anspruch 12,
**dadurch gekennzeichnet, dass** das Zwei- oder Mehrkomponenten-Zahnrad (42, 50) als ein Stirnrad (52) ausgestaltet ist, wobei das Zahnkranzträgerteil (10)
- einen in Umfangsrichtung um eine Drehachse (D) umlaufenden Ringabschnitt (12),
- einen radial außen am Ringabschnitt (12) angeordneten Zahnkranz (14), und
- einen sich vom Ringabschnitt (12) radial nach innen erstreckenden Fortsatz (16) mit einem radial inneren freien Ende (18) aufweist.

14. Zwei- oder Mehrkomponenten-Zahnrad (42, 50), nach Anspruch 12,
**dadurch gekennzeichnet, dass** das Zwei- oder Mehrkomponenten-Zahnrad (42, 50) ein Einlegeteil (54) umfasst, welches mit dem Verbindungsteil (49) verbunden ist und vom Verbindungsteil (49) umschlossen wird.

15. Zwei- oder Mehrkomponenten-Zahnrad (42, 50), nach Anspruch 12,
**dadurch gekennzeichnet, dass** das Zwei- oder Mehrkomponenten-Zahnrad (42, 50) als ein Hohlrad (44) ausgestaltet ist, wobei das Zahnkranzträgerteil (10)
- einen in Umfangsrichtung um eine Drehachse (D) umlaufenden Ringabschnitt (12),
- einen radial innen am Ringabschnitt (12) angeordneten Zahnkranz (14), und
- einen sich vom Ringabschnitt (12) radial nach außen erstreckenden Fortsatz (16) mit einem radial äußeren freien Ende (46) aufweist.

## Claims

1. Ring gear carrier part (10) for a two or multiple component gear wheel (46, 50),
wherein
- the ring gear carrier part (10) comprises
o a ring segment (12) extending in circumferential direction around an axis of rotation (D),
o a ring gear (14) arranged radially on the outside of the ring segment (12), and
o an extension (16) extending radially inwards from the ring segment (12) and having a radial inner free end (18), or
- the ring gear carrier part (10) comprises
o a ring segment (12) extending around an axis of rotation (D) in circumferential direction,
o a ring gear (14) arranged radially on the inside of the ring segment (14), and
o an extension (16) extending radially outwards from the ring segment (12) and having a radial outer free end (46),
- the extension (16) comprises a first width (a) at its radial, inner free end (18) or at its radial outer free end (46) and a second width (b) at its opposite end at the transition to the ring segment (12),
- the first width (a) is smaller than the second width (b),
- the extension (16) widens continuously or in segments continuously from the first width (a) to the second width (b), and
- numerous protrusions (24), extending along the axis of rotation (D), are arranged on the extension (16)
**characterized in that** the protrusions (24) transition into the extension (16) over a convex transition surface (32).

2. Ring gear carrier part (10) in accordance with claim 1,
**characterized in that** numerous first protrusions (24₁) and numerous second protrusions (24₂) are arranged on the extension (16), wherein the first protrusions (24₁) extend from a first axial surface (20) of the extension (16) and the second protrusions (24₂) extend from a second axial surface (22) of the extension (16).

3. Ring gear carrier part (10) in accordance with claim 2,
**characterized in that** the first protrusions (24₁) and the second protrusions (24₂) are arranged offset to each other in the circumferential direction.

4. Ring gear carrier part (10) in accordance with either of claims 2 or 3,
**characterized in that** numerous radial inner protrusions (38) and numerous radial outer protrusions (40) extend from the first axial surface (20) and/or from the second axial surface (22).

5. Ring gear carrier part (10) in accordance with any of the preceding claims,
**characterized in that**, within the protrusions (24), two or more widenings (36) are arranged extending along the axis of rotation (D).

6. Ring gear carrier part (10) in accordance with any of the preceding claims,
**characterized in that** the protrusions (24) comprise a trapezoidal cross section.

7. Ring gear carrier part (10) in accordance with any of the preceding claims,
**characterized in that** the protrusions (24) comprise an end face (26) and/or a further end face (34) that extends parallel to a plane (E) extending vertically to the axis of rotation (D).

8. Ring gear carrier part (10) in accordance with any of claims 2 to 6,
**characterized in that**
- the first axial surface (20) and/or the second axial surface (22) encompass an axial surface angle (α, α1, α2) with a plane (E) extending vertically to the axis of rotation (D), and
- each of the protrusions (24) comprise at least one end face (26) that encompasses an end face angle (β, β1, β2) with a plane (E) extending vertically to the axis of rotation (D), and
- the end face angle (β, β1, β2) is larger than or equal to the axial surface angle (α, α1, α2).

9. Ring gear carrier part (10) in accordance with claim 8,
**characterized in that** the protrusions (24) comprise a further end face (34) which
- extends parallel to a plane (E) that extends vertically to the axis of rotation (D), or
- encloses a further end face angle (γ) with a plane (E) that extends vertically to the axis of rotation (D).

10. Ring gear carrier part (10) in accordance with any of the preceding claims,
**characterized in that** the protrusions (24) comprise an outer radial surface (30) and an inner radial surface (28), wherein the outer radial surface (30) and/or the inner radial surface (28) extends parallel to the axis of rotation (D).

11. Ring gear carrier part (10) in accordance with any of claims 2 to 6,
**characterized in that** the axial surfaces (20, 22), the end faces (26), the further end faces (34), the outer radial surfaces (30) and/or the inner radial surfaces (28) are convex.

12. Two or multiple component gear wheel (42, 50) comprising
- a ring gear carrier part (10) in accordance with any of the preceding claims, and
- a connection part (49) which is positively connected to the ring gear carrier part (10), wherein the connection part (49) encompasses the extension (16).

13. Two or multiple component gear wheel (42, 50) in accordance with claim 12,
**characterized in that** the two or multiple component gear wheel (42, 50) is implemented as a spur gear (52), wherein the ring gear carrier part (10) comprises
- a ring segment (12) that extends around an axis of rotation (D) in a circumferential direction,
- a ring gear (14) arranged radially on the outside of the ring segment (12), and
- an extension (16), with a radial inner free end (18), extending radially inwards from the ring segment (12).

14. Two or multiple component gear wheel (42, 50) in accordance with claim 12,
**characterized in that** the two or multiple component gear wheel (42, 50) comprises an insertion part (54) which is connected to the connection part (49) and which is encompassed by the connection part (49).

15. Two or multiple component gear wheel (42, 50) in accordance with claim 12,
**characterized in that** the two or multiple component gear wheel (42, 50) is implemented as an internal gear (44), wherein the ring gear carrier part (10) comprises
- a ring segment (12) that extends around an axis of rotation (D) in a circumferential direction,
- a ring gear (14) arranged radially on the inside of the ring segment (12), and
- an extension (16), with a radial outer free end (46), extending radially outwards from the ring segment (12).

## Revendications

1. Pièce de support de couronne dentée (10) pour une roue dentée (46, 50) à deux ou plusieurs composants
- la pièce de support de couronne dentée (10) comprenant :
* un segment annulaire (12) tournant dans la direction périphérique autour d'un axe de rotation (D),
* une couronne dentée (14) radialement à l'extérieur du segment annulaire (12) et
* un prolongement (16) s'étendant à partir du segment annulaire (12) radialement vers l'intérieur et ayant une extrémité radiale intérieure libre (18) ou
- la pièce de support de couronne dentée (10) comprenant :
* un segment annulaire (12) tournant dans la direction périphérique autour d'un axe de rotation (D),
* une couronne dentée (14) radialement à l'intérieur sur le segment annulaire (12), et
* un prolongement (16) s'étendant radialement vers l'extérieur à partir du segment annulaire (12) et ayant une extrémité radiale extérieure libre (46)
- le prolongement (16) ayant une première largeur (a) à son extrémité radiale intérieure libre (18) ou à son extrémité radiale extérieure libre (46), et une seconde largeur (b) à son extrémité opposée à la transition avec le segment annulaire (12),
- la première largeur (a) étant inférieure à la seconde largeur (b)
- le prolongement (16) s'élargissant en continu ou par segments de façon continue à partir de la première largeur (a) jusqu'à la seconde largeur (b) et
- le prolongement (16) ayant un nombre de saillies (24) s'étendant le long de l'axe de rotation (D),
pièce **caractérisée en ce que**
les saillies (24) rejoignent le prolongement (16) par une surface de transition (32) bombée.

2. Pièce de support de couronne dentée (10) selon la revendication 1, **caractérisée en ce que**
le prolongement (16) a un nombre de premières saillies (24₁) et un nombre de secondes saillies (24₂), les premières saillies (24₁) partant d'une première surface axiale (20) du prolongement (16) et des secondes saillies (24₂) partant d'une seconde surface axiale (22) du prolongement (16).

3. Pièce de support de couronne dentée (10) selon la revendication 2, **caractérisée en ce que**
les premières saillies (24₁) et les secondes saillies (24₂) sont décalées les unes par rapport aux autres dans la direction périphérique.

4. Pièce de support de couronne dentée (10) selon l'une des revendications 2 ou 3,
**caractérisée en ce que**
un certain nombre de saillies radiales intérieures (38) et un certain nombre de saillies radiales extérieures (40) sont issues de la première surface axiale (20) et/ou de la seconde surface axiale (22).

5. Pièce de support de couronne dentée (10) selon l'une des revendications précédentes,
**caractérisée en ce que**
deux ou plusieurs extensions (36) s'étendant le long de l'axe de rotation (D) sont prévues dans les saillies (24).

6. Pièce de support de couronne dentée (10) selon l'une des revendications précédentes,
**caractérisée en ce que**
les saillies (24) ont une section trapézoïdale.

7. Pièce de support de couronne dentée (10) selon l'une des revendications précédentes,
**caractérisée en ce que**
les saillies (24) ont une surface frontale (26) et/ou une autre surface frontale (34) qui sont parallèles à un plan (E) perpendiculaire à l'axe de rotation (D).

8. Pièce de support de couronne dentée (10) selon l'une des revendications 2 à 6,
**caractérisée en ce que**
- la première surface axiale (20) et/ou la seconde surface axiale (22) font un angle de surface axiale (α, α1, α2) avec un plan (E) perpendiculaire à l'axe de rotation (D), et
- les saillies (24) ont respectivement au moins une surface frontale (26) qui fait un angle de surface frontale (β, β1, β2) avec un plan (E) perpendiculaire à l'axe de rotation (D), et
- l'angle de surface frontale (β, β1, β2) est supérieur ou égal à l'angle de surface axiale ((α, α1, α2).

9. Pièce de support de couronne dentée (10) selon la revendication 8, **caractérisée en ce que**
les saillies (24) ont une autre surface frontale (34) qui :
- est parallèle à un plan (E) perpendiculaire à l'axe de rotation (D) ou
- a un autre angle de surface frontale (y) par rapport à un plan (E) perpendiculaire à l'axe de rotation (D).

10. Pièce de support de couronne dentée (10) selon l'une des revendications précédentes,
**caractérisée en ce que**
les saillies (24) ont une surface radiale extérieure (30) et une surface radiale intérieure (28), la surface radiale extérieure (30) et/ou la surface radiale intérieure (28) étant parallèles à l'axe de rotation (D).

11. Pièce de support de couronne dentée (10) selon l'une des revendications 2 à 6,
**caractérisée en ce que**
les surfaces axiales (20, 22), les surfaces frontales (26), les autres surfaces frontales (34), les surfaces radiales extérieures (30) et/ou les surfaces radiales intérieures (28) sont bombées.

12. Roue dentée à deux ou plusieurs composants (42, 50), comprenant
- une pièce de support de couronne dentée (10) selon l'une des revendications précédentes, et
- une pièce de liaison (49) reliée à la pièce de support de couronne dentée (10) par une liaison par la forme, la pièce de liaison (49) entourant le prolongement (16).

13. Roue dentée à deux ou plusieurs composants (42, 50) selon la revendication 12,
**caractérisée en ce que**
la roue dentée à deux ou plusieurs composants (42, 50) est réalisée sous la forme d'une roue dentée droite (52) et la pièce de support de couronne dentée (10) comprenant :
- un segment annulaire (12) tournant dans la direction périphérique autour d'un axe de rotation (D),
- une couronne dentée (14) radialement à l'extérieur du segment annulaire (12), et
- un prolongement radial (16) s'étendant radialement vers l'intérieur à partir du segment annulaire (12) et ayant une extrémité radiale intérieure libre (18).

14. Roue dentée à deux ou plusieurs composants (42, 50) selon la revendication 12,
**caractérisée en ce que**
la roue dentée à deux ou plusieurs composants (42, 50) comprend un insert (54) relié à la pièce de liaison (49) et entouré par cette pièce de liaison (49).

15. Roue dentée à deux ou plusieurs composants (42, 50) selon la revendication 12,
**caractérisée en ce que**
la roue dentée à deux ou plusieurs composants (42, 50) est une roue à denture intérieure (44), et
la pièce de support de couronne dentée (10) a
- un segment annulaire (12) tournant dans la direction périphérique autour d'un axe de rotation (D),
- une couronne dentée (14) radialement à l'intérieur du segment annulaire (12), et
- un prolongement (16) s'étendant radialement vers l'extérieur à partir du segment annulaire (12) et ayant une extrémité radiale extérieure libre (46).
